# EUROPEAN PATENT APPLICATION

(11) **EP 4 679 142 A1**
(43) Date of publication of application: **14.01.2026**
(21) Application number: 24767164.7
(22) Date of filing: 06.03.2024
(51) Int. Cl.: G01V 3/08, B63C 11/00, B63C 11/48

(54) **SUBMERSIBLE AND ESTIMATION METHOD**

(30) Priority: 06.03.2023 US 202363450160 P
(71) Applicant: KAWASAKI JUKOGYO KABUSHIKI KAISHA, Kobe-shi, Hyogo 650-8670 (JP)
(72) Inventor: OKAYA, Noriyuki, 6508670 Kobe (JP); FUKUI, Koichi, 6508670 Kobe (JP); NAKANO, Hiroaki, 6508670 Kobe (JP); NAKAMURA, Kazuyuki, 6508670 Kobe (JP); NISHIMURA, Tomoki, 6738666 Akashi (JP)
(74) Representative: Wenzel Nemetzade Warthmüller Patentanwälte Part mbB
(86) International application number: PCT/JP2024/008410
(87) International publication number: WO 2024/185797

(57) **Abstract**

A submersible estimates a position of a magnetic pipe provided on a seabed. The submersible comprises a body, a magnetic sensor, a position sensor, a controller, and a processor. The magnetic sensor is arranged on the body and detects a surrounding magnetic flux density. The position sensor is arranged on the body and detects a position. The controller performs control to move the body and control to turn the body. The processor estimates the position of the pipe based on the position detected by the position sensor at a timing when the magnetic sensor detected a peak value.

## Description

### [TECHNICAL FIELD]

The present application mainly relates to a submersible that estimates the position of a magnetic pipe provided on the seabed.

### [BACKGROUND ART]

Patent Literature 1 discloses a system for detecting a submarine cable. The system comprises a plurality of magnetic sensors. The magnetic sensors detect a magnetic field generated by a current flowing through the submarine cable. The magnetic field generated here is a concentric magnetic field centered on the submarine cable. Therefore, the position of the submarine cable can be estimated based on the direction of the magnetic field at a plurality of positions.

### [CITATION LIST]

### [PATENT LITERATURE]

[Patent Literature 1] Japanese Unexamined Patent Application Publication No. H9-127252

### [SUMMARY OF INVENTION]

### [TECHNICAL PROBLEM]

On the seabed, not only cables but also pipes may be arranged. Pipes are used to transport liquid or gaseous substances. Unlike cables, pipes do not carry an electric current. Therefore, the above-described concentric magnetic field is not generated. Accordingly, the system of Patent Literature 1 cannot detect a pipe provided on the seabed. Furthermore, when using a sonar or an optical sensor, a pipe buried in sediment cannot be detected.

The present application has been made in view of the above circumstances, and a main object thereof is to provide a submersible capable of detecting a pipe buried in sediment.

### [SOLUTION TO PROBLEM]

The problem to be solved by the present application is as described above, and next, the means for solving this problem and the effects thereof will be described.

According to a first aspect of the present application, a submersible having the following configuration is provided. That is, the submersible estimates the position of a magnetic pipe provided on the seabed. The submersible comprises a body, a magnetic sensor, a position sensor, a controller, and a processor. The magnetic sensor is arranged on the body and detects the surrounding magnetic flux density. The position sensor is arranged on the body and detects the position. The controller performs control to move the body and control to turn the body. The processor estimates the position of the pipe based on the position detected by the position sensor at the timing when the magnetic sensor detected a peak value.

According to a second aspect of the present application, the following estimation method is provided. That is, the estimation method estimates the position of a magnetic pipe provided on the seabed by performing the following processing. While moving a submersible, the magnetic flux density is detected using a magnetic sensor arranged on the submersible, and the position of the submersible is detected using a position sensor arranged on the submersible. The position of the pipe is estimated based on the position detected by the position sensor at the timing when the magnetic sensor detected a peak value.

### [ADVANTAGEOUS EFFECTS OF INVENTION]

According to the present application, a pipe buried in sediment can be detected.

### [BRIEF DESCRIPTION OF DRAWINGS]

[FIG. 1]A plan view of a submersible according to an embodiment of the present application.
[FIG. 2]A side view of the submersible.
[FIG. 3]A plan view of a magnetic field created by a bar-shaped magnetic body.
[FIG. 4]A side view of a magnetic field created by a bar-shaped magnetic body.
[FIG. 5]A diagram for explaining a flowchart of a process for estimating the position and direction of a pipe and a specific example of the process of each flow.
[FIG. 6]A plan view showing an overview of a peak detection process (1).
[FIG. 7]A plan view showing an overview of a peak detection process (2).
[FIG. 8]A plan view showing an overview of a case where a pipe can be detected by the first lateral movement in a pipe position estimation process (1-2).
[FIG. 9]A diagram for explaining an overview of a case where, in the pipe position estimation process (1-2), when the pipe cannot be detected by the first lateral movement, the submersible turns and detects the pipe again.
[FIG. 10]A plan view showing an overview of a pipe position estimation process (2).
[FIG. 11]A perspective view showing an overview of a pipe position estimation process (3).
[FIG. 12]A plan view showing an overview of a pipe direction estimation process (1).
[FIG. 13]A plan view showing an overview of a pipe direction estimation process (2).
[FIG. 14]A flowchart showing a tracking process for moving the submersible along a pipe.
[FIG. 15]A plan view showing an overview of a process for turning the submersible based on a command value of the heading during the tracking process.
[FIG. 16]A plan view showing an overview of a process for parallelly moving the submersible based on a command value of the velocity in the left-right direction during the tracking process.

### [DESCRIPTION OF EMBODIMENTS]

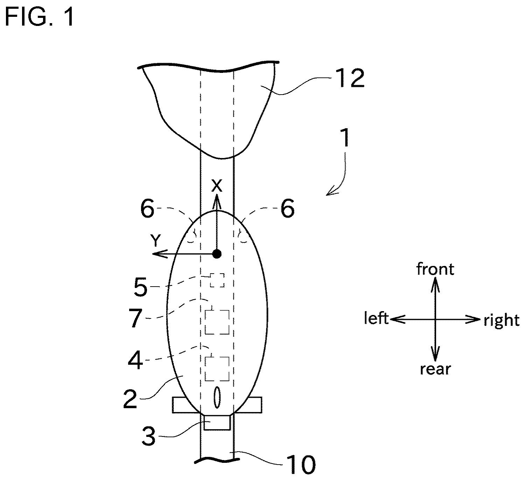

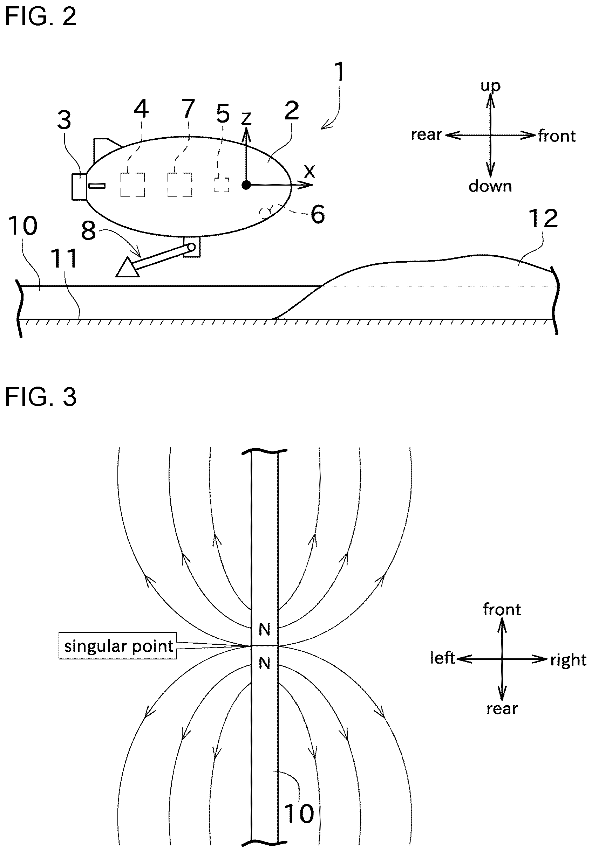

Next, embodiments of the present application will be described with reference to the drawings. First, an overview of a submersible 1 and a pipe 10 will be described with reference to FIG. 1 and FIG. 2.

The submersible 1 is an AUV. AUV is an abbreviation for autonomous underwater vehicle. The submersible 1 moves underwater autonomously without being operated by a person. The submersible 1 searches for the pipe 10 provided on the seabed 11 and inspects the pipe 10.

The pipe 10 is used, for example, to transport petroleum or natural gas. The pipe 10 is a cylindrical member made of a magnetic body. The pipe 10 is substantially linear. Substantially linear means that when the submersible 1 searches for the pipe 10, considering the pipe 10 as linear has almost no effect on the search for the pipe 10. The pipe 10 may be buried in sediment 12, and in that case, it cannot be detected by sonar or the like.

The submersible 1 comprises a body 2, a propulsion device 3, a controller 4, a position sensor 5, a magnetic sensor 6, a processor 7, and an inspection tool 8.

The body 2 is a member having water resistance and pressure resistance, and an internal space is formed therein. Various components constituting the submersible 1 are arranged in the internal space.

The propulsion device 3 generates thrust for moving the submersible 1 in an arbitrary direction. The propulsion device 3 has a screw and a rudder. The screw generates thrust by being rotationally driven by a motor or an engine or the like. The rudder changes the direction in which the thrust acts. Note that, instead of the rudder, the direction of the screw may be changeable.

The controller 4 controls the propulsion device 3. The controller 4 is a computer and has a calculation device such as a CPU and a storage device such as a flash memory or an SSD. By the calculation device executing a program stored in the storage device, the controller 4 transmits a command value regarding propulsion force or propulsion direction to the propulsion device 3.

The position sensor 5 detects the position of the submersible 1. The position sensor 5 is, for example, an inertial navigation system and includes an acceleration sensor. The inertial navigation system calculates the change in position from a reference point by integrating acceleration twice with respect to time. Similarly, the position sensor 5 can also calculate the heading, which is the orientation of the submersible 1, based on the change in angular velocity. Note that the position sensor 5 is not limited to the inertial navigation system, and another device capable of position detection underwater may be used. The position sensor 5 outputs the detection result of the position of the submersible 1 to the processor 7.

The magnetic sensor 6 detects the magnetic flux density of each of three orthogonal axes. The magnetic sensor 6 is a fluxgate sensor. The magnetic sensor 6 outputs the detection result of the surrounding magnetic flux density of the submersible 1 to the processor 7. The magnetic sensor 6 may be a sensor other than a fluxgate sensor.

Two magnetic sensors 6 are arranged on the submersible 1. The two magnetic sensors 6 are arranged separately on the left and right, sandwiching the center position in the width direction of the submersible 1. Specifically, the two magnetic sensors 6 are arranged symmetrically with respect to a straight line passing through the center position in the width direction of the submersible 1. Therefore, the two magnetic sensors 6 are separated by the same distance from the center position in the width direction of the submersible 1. The distance in the width direction of the two magnetic sensors 6 is preferably larger than the pipe 10 to be searched. Furthermore, the magnetic sensor 6 is arranged below the center in the height direction of the submersible 1. The magnetic sensor 6 is arranged forward of the center in the front-rear direction of the submersible 1. The features related to the layout of the magnetic sensor 6 described above are an example, and any feature may be omitted from the features described above. Furthermore, the number of magnetic sensors 6 arranged is an example, and may be one, or three or more.

The processor 7 is a computer and has a calculation device such as a CPU and a storage device such as a flash memory or an SSD. By the calculation device executing a program stored in the storage device, the processor 7 performs analysis of received data, estimation of the position of the pipe 10, estimation of the orientation of the pipe 10, and the like. In the present embodiment, the controller 4 and the processor 7 are different hardware, but they may be the same hardware.

The inspection tool 8 has a robot arm and an inspector attached to the tip of the robot arm. The robot arm operates based on a command from the processor 7. The inspector detects the state of the pipe 10. The inspector is, for example, a camera for photographing the pipe 10, or a device for inspecting the degree of deterioration of the anticorrosion treatment of the pipe 10. Note that the inspection tool 8 is not an essential component and can be omitted. In this case, the submersible 1 of the present embodiment is used for searching for the pipe 10, and the inspection of the pipe 10 is performed by another AUV.

A body coordinate system is set for the submersible 1. The body coordinate system has the reference position of the submersible 1 as the origin, the front-rear direction is the X-axis, the left-right direction (in other words, the width direction) is the Y-axis, and the height direction is the Z-axis. Note that the magnetic flux density detected by the magnetic sensor 6 is the magnitude of the magnetic flux density of each of the X-axis, the Y-axis, and the Z-axis. Furthermore, the submersible 1 controls its attitude so as to maintain a state where the vertical direction and the Z-axis are parallel.

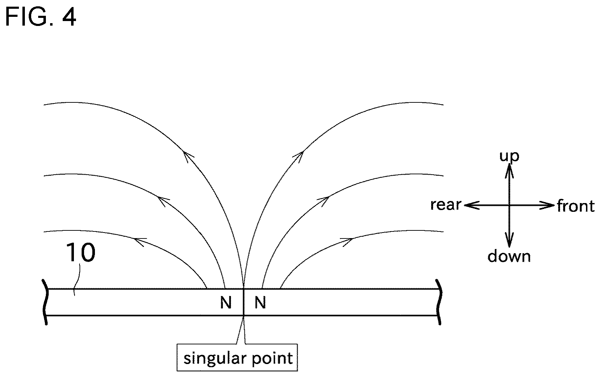

Next, the magnetic field created by the pipe 10 will be described with reference to FIG. 3 and FIG. 4.

The pipe 10 is created by joining pipe constituent members of about several meters to each other. The pipe constituent member includes an N pole and an S pole. When the S pole and the N pole of the pipe constituent members are joined, the magnetic poles of the joint portion are canceled, so it can be regarded as one long pipe constituent member. When the N poles of the pipe constituent members are joined, the joint portion maintains the N pole. When the S poles of the pipe constituent members are joined, the joint portion maintains the S pole. Generally, since the magnetic poles are not considered when joining the pipe constituent members, the interval between the portions where the same poles are connected is not constant.

The magnetic field created by a magnetic body is equivalent to the magnetic field created by a magnet. Therefore, the magnetic field created by the pipe 10 is equivalent to the magnetic field created by a bar magnet. Therefore, a magnetic field is created that draws an arc from the N pole toward the S pole.

As shown in FIG. 3, in a plan view, at a position sufficiently distant from the magnetic poles, a magnetic field substantially parallel to the longitudinal direction of the pipe 10 is created. Furthermore, in the vicinity of the magnetic poles, the magnetic field of the component in the width direction of the pipe 10 becomes strong. Furthermore, at the portion where the same poles are connected, the magnetic flux is concentrated, so the magnetic field becomes particularly strong. The portion where the same poles are connected is referred to as a "singular point" in this specification. In this way, the direction and strength of the magnetic field are not constant. However, the strength of the magnetic field in the horizontal direction tends to become stronger as it approaches the pipe 10. The strength of the magnetic field in the horizontal direction is the length of the vector of the magnetic flux density in the horizontal direction obtained from the magnetic flux density of the X-axis and the magnetic flux density of the Y-axis detected by the magnetic sensor 6. Hereinafter, the peak value taken by the length of the vector of the magnetic flux density in the horizontal direction is referred to as a "horizontal peak value".

As shown in FIG. 4, in a side view, at a position sufficiently distant from the magnetic poles, a magnetic field substantially parallel to the longitudinal direction is created. Furthermore, in the vicinity of the magnetic poles, the magnetic field of the component in the height direction becomes strong. The magnetic field in the height direction becomes stronger as it approaches the "singular point". The strength of the magnetic field in the height direction is the absolute value of the magnetic flux density of the Z-axis detected by the magnetic sensor 6. Hereinafter, the peak value of the magnetic flux density in the height direction is referred to as a "height peak value".

Hereinafter, when referred to as a "peak value", it means any of (a) only the horizontal peak value, (b) only the height peak value, or (c) both the horizontal peak value and the height peak value. Furthermore, when referred to as a "detection value", it means any of (a) the detection value of each axis, (b) the detection value in the horizontal direction, or (c) the detection value in the height direction. Furthermore, when comparing the magnitudes of detection values or magnetic flux densities, they are compared by their absolute values.

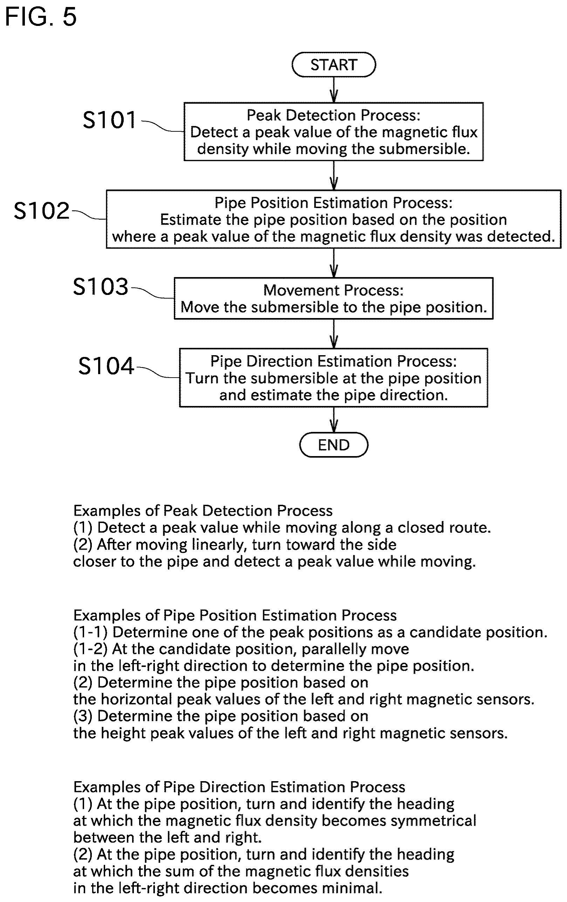

Next, an overview of the process for estimating the position and direction of the pipe will be described with reference to FIG. 5.

First, the controller 4 moves the submersible 1 along a predetermined route or using a predetermined rule (S101). While the submersible 1 is moving, the magnetic sensor 6 detects the magnetic flux density. The processor 7 detects the peak value of the magnetic flux density based on the magnetic flux density detected by the magnetic sensor 6 (S101). The processor 7 stores the peak value of the magnetic flux density and the position detected by the position sensor 5 when the peak value was detected in association with each other. The process of step S101 is referred to as a "peak detection process". A specific example of the peak detection process will be described later.

Next, the processor 7 analyzes the stored information and estimates the position of the pipe 10 based on the position where the peak value of the magnetic flux density was detected (S102). In the following description, the position of the pipe 10 in a plan view is referred to as a "pipe position". This is because the pipe 10 is basically located on the seabed, so it is not necessary to clearly specify the position of the pipe 10 in the height direction. Furthermore, basically, the position where the peak value of the magnetic flux density was detected is highly likely to be the position directly above the pipe 10. However, the position where the peak value was detected may be a position where a substance other than the pipe 10 was detected, or a position close to the above-described singular point. Therefore, it is necessary to specify whether or not the position where the peak value was detected is the position directly above the pipe 10. The process of step S102 is referred to as a "pipe position estimation process". A specific example of the pipe position estimation process will be described later.

Next, the controller 4 moves the submersible 1 to the pipe position (S103). The process of step S103 is referred to as a "movement process".

Next, the controller 4 turns the submersible 1 at the pipe position (S104). While the submersible 1 is turning, the magnetic sensor 6 detects the magnetic flux density. The processor 7 stores the magnetic flux density detected by the magnetic sensor 6 and the direction of the heading detected by the position sensor 5 in association with each other. The processor 7 estimates the longitudinal direction of the pipe 10 based on the detected magnetic flux density (S104). In the following description, the longitudinal direction of the pipe 10 in a plan view is referred to as a "pipe direction". The process of step S104 is referred to as a "pipe direction estimation process". A specific example of the pipe direction estimation process will be described later.

Note that the estimation of the pipe direction is not essential. Therefore, the submersible 1 does not have to execute the movement process and the pipe direction estimation process. Furthermore, the processor 7 may perform the pipe position estimation process based on the position and magnetic flux density acquired by another submersible. In this case, the submersible 1 does not need to execute the peak detection process.

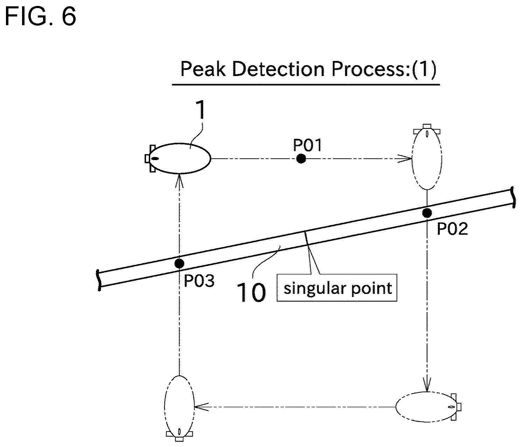

Next, a first specific example of the peak detection process will be described with reference to FIG. 5 and FIG. 6. Hereinafter, the first specific example of the peak detection process is referred to as a peak detection process (1).

As described in FIG. 5, the peak detection process (1) is a process of detecting a peak value while moving the submersible 1 along a closed route. Moving the submersible 1 along a closed route is referred to as a first search. A closed route is a route that returns to the starting point via one or more waypoints from the starting point. As a result, when the pipe 10 exists inside the closed route, it intersects with the pipe 10, so a peak value is detected at the timing of intersecting with the pipe 10 (P02, P03 in FIG. 6). Note that a peak value is also detected even when the submersible 1 approaches and separates from a singular point (P01 in FIG. 6). The closed route is various, and for example, it may be a polygon or a circle. Furthermore, when turning the submersible 1, the submersible 1 may be stopped and then turned, or the submersible 1 may be turned while moving.

In the present embodiment, the closed route is a polygon, and the submersible 1 is stopped and then turned. As a result, the distance for moving the submersible 1 linearly becomes long, so it can be moved accurately along the route. The closed route is predetermined and stored in the processor 7. If a peak value can be detected by moving the submersible 1 along the closed route, the process is terminated. If a peak value cannot be detected by moving the submersible 1 along the closed route, another closed route is determined, and the submersible 1 is moved along that route.

When the closed route is a polygon as in the present embodiment, a peak value is detected for each side. This is because when the traveling direction of the submersible 1 changes, the tendency of the direction and magnitude of the magnetic flux density changes, so a peak value spanning two sides may not be an appropriate peak value.

In the peak detection process (1), of the horizontal peak value and the height peak value, the horizontal peak value is preferentially adopted. Specifically, on one side, if a horizontal peak value can be detected, only the horizontal peak value is used. On the other hand, on one side, if a horizontal peak value cannot be detected and a height peak value can be detected, the height peak value is used.

In the peak detection process (1), only one of the left and right magnetic sensors 6 is used. Either magnetic sensor 6 may be used, but by using the outer magnetic sensor 6, the detection range can be widened.

The specific features of the peak detection process (1) described above are an example, and at least one may be omitted.

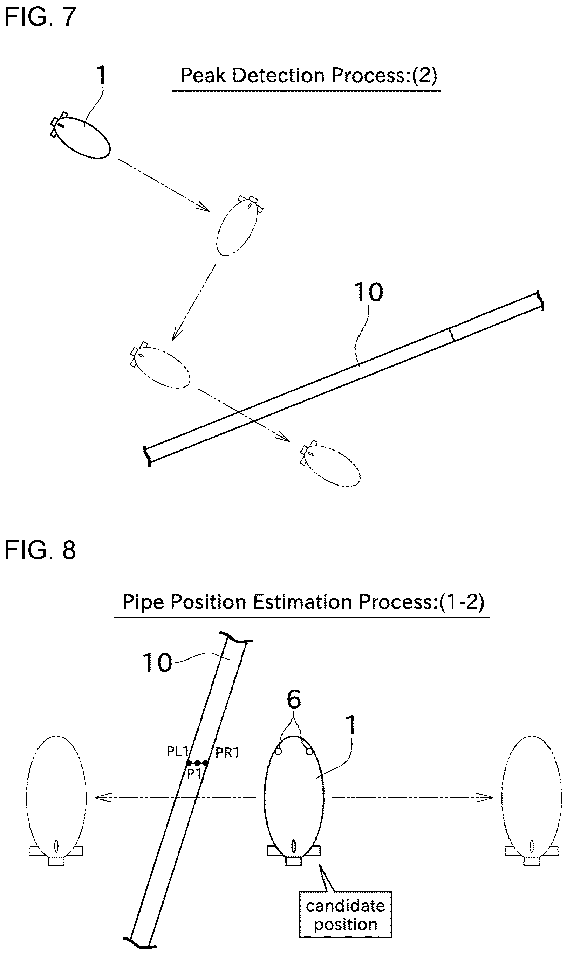

Next, a second specific example of the peak detection process will be described with reference to FIG. 5 and FIG. 7. Hereinafter, the second specific example of the peak detection process is referred to as a peak detection process (2).

As described in FIG. 5, the peak detection process (2) moves the submersible 1 by moving the submersible 1 linearly and then turning the submersible 1 to the side closer to the pipe 10. Moving and turning the submersible 1 in this way is referred to as a second search. As a result, each time the submersible 1 is turned, the submersible 1 can be brought closer to the pipe 10. Which of the left and right is closer to the pipe 10 is determined using the detection values of the left and right magnetic sensors 6. For example, if the detection value of the left magnetic sensor 6 is larger than the detection value of the right magnetic sensor 6, it is highly likely that the pipe 10 exists on the left side as seen from the submersible 1. Therefore, the submersible 1 turns toward the side of one of the left and right magnetic sensors 6 with the larger detection value.

In more detail, the distance to move linearly is predetermined. The turning angle is determined to be 90 degrees. Furthermore, which of the left and right is closer to the pipe 10 is determined using the integrated value of the magnetic sensors 6 detected while moving linearly. Note that the distance to move linearly may be variable, and the turning angle may be other than 90 degrees. Furthermore, which of the left and right is closer to the pipe 10 may be determined based on the magnetic flux density detected by the magnetic sensor 6 immediately before turning.

The peak detection process (2) mainly aims to detect a peak value once. However, after detecting a peak value, the same process may be repeated to detect a peak value multiple times. In the peak detection process (2), it is preferable to use the horizontal peak value of the horizontal peak value and the height peak value.

Next, a first specific example of the pipe position estimation process will be described with reference to FIG. 5, FIG. 8, and FIG. 9. Hereinafter, the first specific example of the pipe position estimation process is referred to as a pipe position estimation process (1). The pipe position estimation process (1) is assumed to be performed together with the peak detection process (1), but it may be performed together with the peak detection process (2). The pipe position estimation process (1) is divided into two stages.

In the first stage of the pipe position estimation process (1), one of the peak positions is determined as a candidate position. A "candidate position" is a candidate for the pipe position. A "peak position" is the position of the reference point of the submersible 1 when the peak value was detected. The reference point is, for example, a point passing through the center in the width direction of the submersible 1, but it may be the position of the magnetic sensor 6 as will be described later.

If one peak position is detected in the peak detection process, that peak position is determined as the candidate position. If a plurality of peak positions is detected in the peak detection process, the peak position selected based on a predetermined criterion is determined as the candidate position. The predetermined criterion is, for example, the magnitude of the peak value. That is, the peak position with the largest peak value is determined as the candidate.

Note that in the pipe position estimation process (1), a temporary pipe direction may be estimated. The pipe direction estimated here is a provisional value, and an accurate value is determined in the pipe direction estimation process. The temporary pipe direction is the initial position when performing the pipe direction estimation process, and is used to reduce the processing time of the pipe direction estimation process. Therefore, the estimation of the temporary pipe direction is not essential and can be omitted.

The temporary pipe direction is calculated by a different process according to the number of peak values detected in the peak detection process (1). When one peak value is detected, the direction parallel to the side where the peak value was detected is calculated as the temporary pipe direction. When two peak values are detected, the direction parallel to the straight line connecting the two peak positions is calculated as the temporary pipe direction. When three peak values are detected, the direction parallel to the longest side of the triangle connecting the three peak positions is calculated as the temporary pipe direction. When four or more peak values are detected, an approximation method such as the least squares method is used to find a straight line that minimizes the sum of the distances from all peak positions, and the direction parallel to this straight line is calculated as the temporary pipe direction.

In the second stage of the pipe position estimation process (1), after positioning the submersible 1 at the candidate position, the pipe position is determined by parallelly moving the submersible 1 in the left-right direction. The candidate position is highly likely to be the position where the submersible 1 passed directly above the pipe 10. Furthermore, even if the candidate position is a peak position resulting from the submersible 1 passing near a singular point, it is highly likely that the pipe 10 exists near this candidate position. As shown in FIG. 8, the submersible 1 parallelly moves by a predetermined distance to the left and right respectively. The predetermined distance is a value that depends on the detection accuracy of the peak position and the like. The predetermined distance is, for example, a distance of 1 to 4 times the interval between the left and right magnetic sensors 6.

At the time of the left and right parallel movement, in order to estimate the pipe position more accurately while avoiding erroneous detection and the like, it is preferable to detect the magnetic flux density using both the left and right magnetic sensors 6. Furthermore, in order to be able to accurately detect the pipe 10 at a location distant from the singular point, it is preferable that the detection target is the horizontal peak value. By parallelly moving the submersible 1 in the left-right direction, as shown in FIG. 8, at the timing when the left and right magnetic sensors 6 are respectively positioned directly above the central axis of the pipe 10, the left and right magnetic sensors 6 respectively detect a peak value. Let the position of the left magnetic sensor 6 when the left magnetic sensor 6 detected a peak value be a point PL1, and let the position of the right magnetic sensor 6 when the right magnetic sensor 6 detected a peak value be a point PR1. The position of the magnetic sensor 6 with respect to the position of the position sensor 5 is clear from design information and the like, and the position of the magnetic sensor 6 can be specified based on that design information and the position detected by the position sensor 5. The positions of the point PL1 and the point PR1 should substantially match. The processor 7 estimates a point P1, which is the midpoint of the point connecting the point PL1 and the point PR1, as the pipe position.

In the second stage of the pipe position estimation process (1), only one of the left and right magnetic sensors 6 may be used. Even in this case, the pipe position can be estimated with sufficient accuracy.

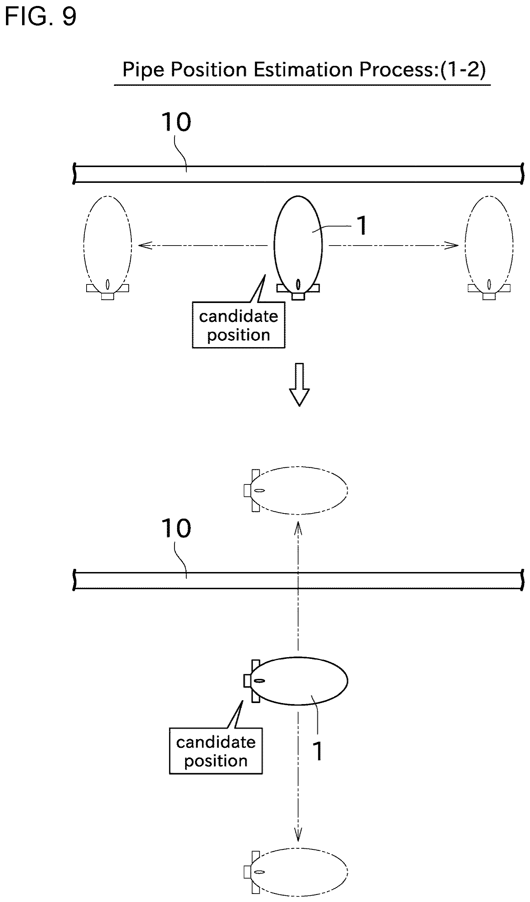

Here, as shown in FIG. 9, when the left-right direction of the submersible 1 and the pipe direction are parallel or substantially parallel, even if the submersible 1 is parallelly moved in the left-right direction, the submersible 1 does not pass directly above the pipe 10, so there is a possibility that a peak value cannot be detected. In order to detect the pipe position even in such a situation, if a peak value cannot be detected by moving in the left-right direction, the submersible 1 is turned by a predetermined angle (for example, 90 degrees), and the submersible 1 is again parallelly moved in the left-right direction. As a result, as shown in FIG. 9, the submersible 1 will pass directly above the pipe position, so the pipe position can be estimated.

Note that the process of turning the submersible 1 by a predetermined angle is not essential and can be omitted. Furthermore, when it is determined that the estimation of the pipe position has failed, the submersible 1 executes the peak detection process again.

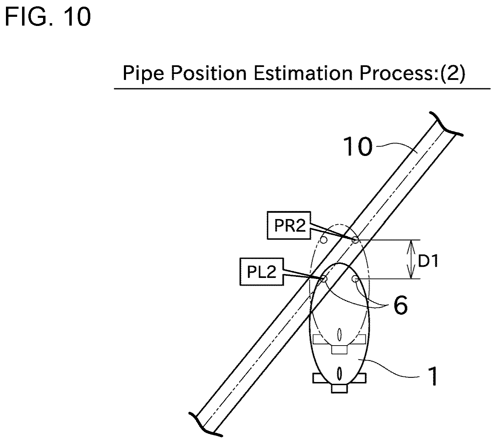

Next, a second specific example of the pipe position estimation process will be described with reference to FIG. 5 and FIG. 10. Hereinafter, the second specific example of the pipe position estimation process is referred to as a pipe position estimation process (2). The pipe position estimation process (2) is assumed to be performed together with the peak detection process (2), but it may be performed together with the peak detection process (1).

In the pipe position estimation process (2), it is a premise that a peak is detected using the two left and right magnetic sensors 6 in the peak detection process. Furthermore, similar to the pipe position estimation process (1), the position of each magnetic sensor 6 when the left and right magnetic sensors 6 detected a peak value is used. Hereinafter, the position of the left magnetic sensor 6 when the left magnetic sensor 6 detected a peak value is referred to as a point PL2, and the position of the right magnetic sensor 6 when the right magnetic sensor 6 detected a peak value is referred to as a point PR2.

The processor 7 estimates that the pipe 10 exists on the straight line connecting the point PL2 and the point PR2. In other words, the pipe position is an arbitrary point on this straight line. The temporary pipe direction is a direction parallel to this straight line.

In the pipe position estimation process (2), in order to suppress erroneous detection, at least one of the following three processes may be executed.

In the first process, first, a first distance in the front-rear direction (X-axis direction) between the peak position of the left magnetic sensor 6 and the peak position of the right magnetic sensor 6 is calculated. Next, a second distance that the submersible 1 advanced from when one of the left and right magnetic sensors 6 detected a peak value until the other of the left and right magnetic sensors 6 detects a peak value is calculated. When the magnetic sensor 6 is detecting the pipe 10, the first distance and the second distance should substantially match. The first distance and the second distance are indicated by D1 in FIG. 10. If the difference between the first distance and the second distance exceeds a threshold value, it is determined that there is a possibility of erroneous detection, and it is not estimated as the pipe position.

In the second process, the direction of a first vector of the magnetic flux density in the horizontal direction detected by the left magnetic sensor 6 and the direction of a second vector of the magnetic flux density in the horizontal direction detected by the right magnetic sensor 6 are calculated. When the magnetic sensor 6 is detecting the pipe 10, the direction of the first vector and the direction of the second vector should substantially match. Therefore, if the difference in direction between the first vector and the second vector exceeds a threshold value, it is determined that there is a possibility of erroneous detection, and it is not estimated as the pipe position.

The third process can be used when a pair of left and right magnetic sensors 6 are arranged not only in the front but also in the rear. Specifically, the pipe position estimation process (2) is similarly performed with the front left and right magnetic sensors 6 and the rear left and right magnetic sensors 6. When the magnetic sensor 6 is detecting the pipe 10, the pipe position estimated using the detection result of the front left and right magnetic sensors 6 and the pipe position estimated using the detection result of the rear left and right magnetic sensors 6 should substantially match. Therefore, if the difference between the two pipe positions exceeds a threshold value, it is determined that there is a possibility of erroneous detection, and it is not estimated as the pipe position.

Next, a third specific example of the pipe position estimation process will be described with reference to FIG. 4, FIG. 5, and FIG. 11. Hereinafter, the third specific example of the pipe position estimation process is referred to as a pipe position estimation process (3). The pipe position estimation process (3) is assumed to be performed together with the peak detection process (2), but it may be performed after the peak detection process (1). Furthermore, the pipe position estimation process (2) and the pipe position estimation process (3) may be performed in combination.

The pipe position estimation process (3) is a process of determining the pipe position based on the height peak values of the left and right magnetic sensors 6. In the pipe position estimation process (3), the height peak value is used, and the two left and right magnetic sensors 6 are used. As shown in FIG. 4, in the vicinity of a singular point, the component of the magnetic field in the height direction becomes strong. Therefore, in the vicinity of a singular point, it is highly likely that a height peak value is detected. Furthermore, the magnetic field created by the pipe 10 can be approximated by a straight line in a situation sufficiently close to the pipe 10. Therefore, the position of the pipe 10 can be estimated based on the three-dimensional vector of the magnetic flux density detected by the magnetic sensor 6.

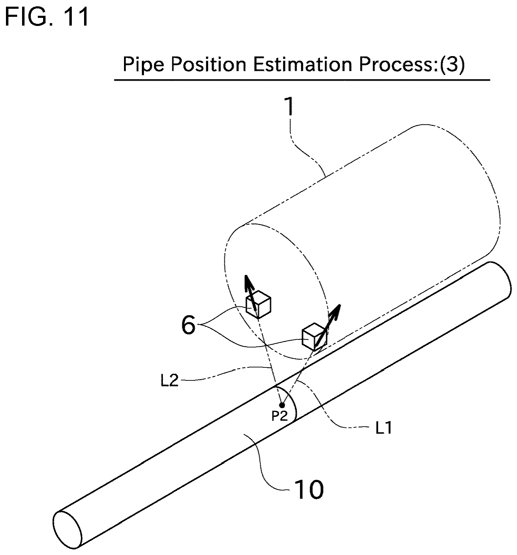

Specifically, when a height peak is detected, a virtual line obtained by extending the three-dimensional magnetic flux density vector (thick line in FIG. 11) detected by the left magnetic sensor 6 is referred to as a virtual line L1. Similarly, when a height peak is detected, a virtual line obtained by extending the three-dimensional magnetic flux density vector (thick line in FIG. 11) detected by the right magnetic sensor 6 is referred to as a virtual line L2. The direction to extend the virtual line is, for example, the side closer to the pipe 10, the side including the downward direction as a component, the opposite side of the direction of the magnetic force in the case of a singular point of an N pole, and the direction indicated by the magnetic force in the case of a singular point of an S pole. Note that the virtual line may be extended in both directions. Then, the intersection of the virtual line L1 and the virtual line L2 is referred to as a point P2. The submersible 1 estimates the position of the point P2 as the pipe position.

In the pipe position estimation process (3), in order to suppress erroneous detection, at least one of the following two processes may be executed.

The first process is not to estimate as the pipe position because the detection accuracy of the pipe 10 becomes low when the magnetic sensor 6 is far from the pipe 10. As described above, the magnetic field can be approximated by a straight line in the vicinity of the pipe 10, but the error becomes larger as the distance from the pipe 10 increases. Therefore, when the virtual line L1 or the virtual line L2 exceeds a threshold value, it is determined that the error becomes large, and the point P2 is not estimated as the pipe position.

The second process can be used when a pair of left and right magnetic sensors 6 are arranged not only in the front but also in the rear. Specifically, the pipe position estimation process (3) is similarly performed with the front left and right magnetic sensors 6 and the rear left and right magnetic sensors 6. If there is no erroneous detection, the pipe positions of both should substantially match. Therefore, if the difference between the two pipe positions exceeds a threshold value, it is determined that there is a possibility of erroneous detection, and it is not estimated as the pipe position.

Next, a specific example of the pipe direction estimation process will be described with reference to FIG. 5, FIG. 12, and FIG. 13. Hereinafter, a first specific example of the pipe direction estimation process is referred to as a pipe direction estimation process (1), and a second specific example of the pipe direction estimation process is referred to as a pipe direction estimation process (2).

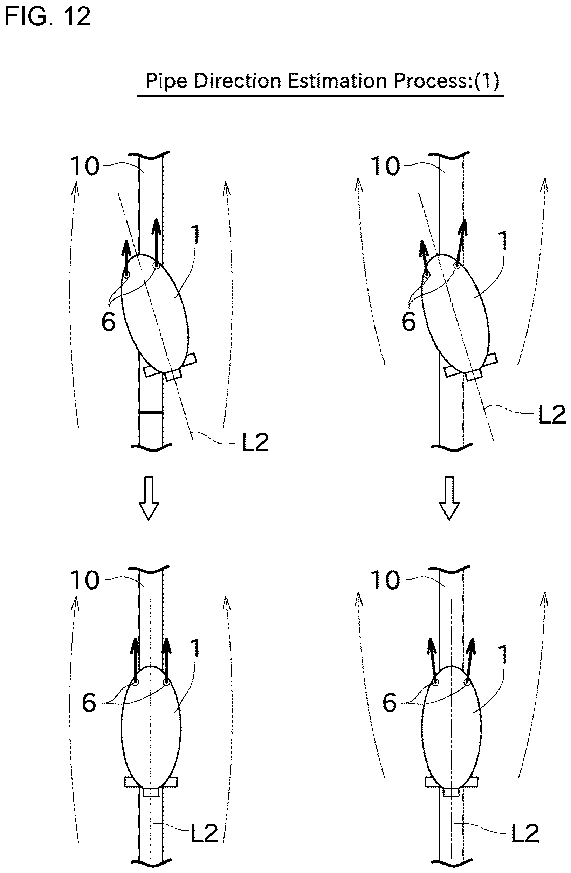

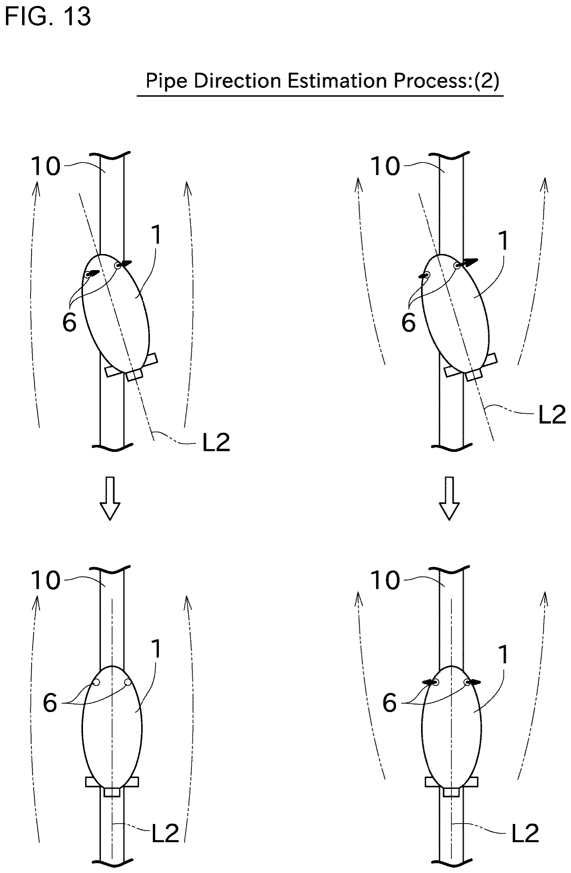

As described with reference to FIG. 3, at a position sufficiently distant from the joint position of the same poles, the vector of the magnetic flux density in the horizontal direction becomes parallel to the pipe direction. The diagrams on the left side of FIGS. 12 and 13 show the relationship between the magnetic flux density at this time, the submersible 1, and the pipe 10. Furthermore, in the vicinity of the joint position of the same poles, the vector of the magnetic flux density in the horizontal direction spreads outward or narrows inward in the width direction of the pipe 10. The diagrams on the right side of FIGS. 12 and 13 show the relationship between the magnetic flux density spreading outward in the width direction of the pipe 10, the submersible 1, and the pipe 10.

As described above, the pipe direction estimation process turns the submersible 1 at the pipe position and estimates the pipe direction based on the magnetic flux density detected during the turning. In the pipe direction estimation process (1), the heading when the vector of the magnetic flux density in the horizontal direction detected by the left magnetic sensor 6 and the vector of the magnetic flux density in the horizontal direction detected by the right magnetic sensor 6 become symmetrical with respect to the heading is estimated as the pipe direction. By detecting the pipe direction by this method, as shown in the two lower diagrams of FIG. 12, an appropriate pipe direction can be estimated regardless of whether the magnetic flux density is parallel to the pipe 10 or not.

In the pipe direction estimation process (2), the heading when the sum of the first magnetic flux density in the left-right direction detected by the left magnetic sensor 6 and the second magnetic flux density in the left-right direction detected by the right magnetic sensor 6 becomes minimum is estimated as the pipe direction. That is, the magnetic field created by the pipe 10 in a plan view is symmetrical with respect to the axis of the pipe 10. Therefore, when the central axis of the submersible 1 and the central axis of the pipe 10 overlap, the first magnetic flux density and the second magnetic flux density are in opposite directions and have the same magnitude. Therefore, the sum of the first magnetic flux density and the second magnetic flux density should ideally be 0. Note that in reality, it is highly likely not to become 0 due to the influence of the earth's magnetic field or other magnetic bodies. By using the above method, as shown in the lower diagram of FIG. 13, an appropriate pipe direction can be estimated regardless of whether the magnetic flux density is parallel to the pipe 10 or not.

Note that when a pair of left and right magnetic sensors 6 are arranged not only in the front but also in the rear, the pipe direction estimation processes (1) and (2) can be performed respectively in the front and the rear. As a result, by confirming that the same result is obtained in both the front and the rear, it can be verified that the estimation accuracy of the pipe direction is high. Note that when different results are obtained in the front and the rear, in the case of the pipe direction estimation process (1), the submersible 1 may be turned or moved so that it becomes symmetrical in both the front and the rear, and the pipe direction may be estimated again. Similarly, in the case of the pipe direction estimation process (2), the submersible 1 may be turned or moved so that the sum of the first magnetic flux density and the second magnetic flux density becomes minimum in both the front and the rear, and the pipe direction may be estimated again.

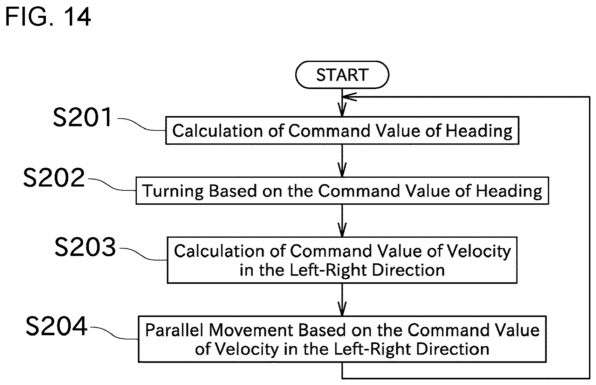

Next, a tracking process for moving the submersible 1 along the detected pipe 10 will be described with reference to FIG. 14 to FIG. 16.

The tracking process is used for inspection of the pipe 10, or for recording the position of the detected pipe 10, and the like. Before starting the tracking process, the submersible 1 is positioned directly above the above-described pipe position, and the front-rear direction of the submersible 1 is aligned with the pipe direction. After that, while correcting the error of the orientation and position, the submersible 1 is moved along the pipe direction. Specifically, the process of FIG. 14 below is executed.

First, the processor 7 calculates a command value for the heading (S201). The command value for the heading is a command value indicating the change angle of the heading. The command value for the heading includes a direction command indicating whether to turn to the left or right, and a turning amount command indicating how much to turn. The command value for the heading is calculated based on the detection values of the left and right magnetic sensors 6. The command value for the heading is a command value that specifies the angle to be changed, but instead of that, it may be a command value that specifies the angular velocity. The command value for the heading corresponds to a direction command value.

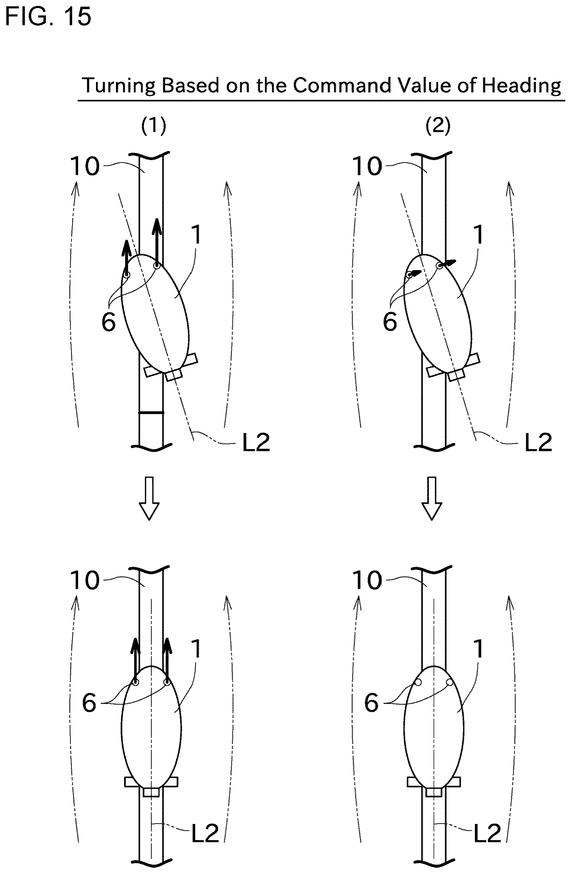

There are various methods for calculating the command value for the heading, but two specific examples will be described here. The first is a process similar to the pipe direction estimation process (1). Specifically, as shown in (1) of FIG. 15, the heading is changed so that the vector of the magnetic flux density in the horizontal direction detected by the left magnetic sensor 6 and the vector of the magnetic flux density in the horizontal direction detected by the right magnetic sensor 6 become symmetrical with respect to the heading. In the example shown in FIG. 15, since the heading is shifted to the left side, the direction command is the right side. Furthermore, the turning amount command is an amount that depends on the amount of deviation of the heading. Specifically, a value of an amount corresponding to the angle formed by the bisector of the two vectors and the current heading is set as the turning amount command. As a result, when the deviation amount is large, the deviation amount can be brought close to zero at an early stage.

The second is a process similar to the pipe direction estimation process (2). Specifically, as shown in (2) of FIG. 15, the heading is changed so that the absolute value of the sum of the first magnetic flux density in the left-right direction detected by the left magnetic sensor 6 and the second magnetic flux density in the left-right direction detected by the right magnetic sensor 6 approaches zero. In the example shown in FIG. 15, the second magnetic flux density in the left-right direction detected by the right magnetic sensor 6 is larger than the first magnetic flux density in the left-right direction detected by the left magnetic sensor 6. Therefore, the direction command is the right side. Furthermore, for the turning amount command, a value of an amount corresponding to the magnitude of the sum of the two vectors is set. As a result, when the deviation amount is large, the deviation amount can be brought close to zero at an early stage.

The controller 4 controls the propulsion device 3 based on the command value for the heading calculated by the processor 7 in step S201, and turns the submersible 1 (S202).

Next, the processor 7 calculates a command value for the velocity in the left-right direction (S203). The command value for the velocity in the left-right direction includes a left-right command indicating which of the left and right velocities to increase, and a velocity amount command indicating how much to increase the velocity. The command value for the velocity in the left-right direction is calculated based on the detection values of the left and right magnetic sensors 6. The command value for the velocity in the left-right direction corresponds to a command for adjusting the position in the left-right direction, so it is a type of position command value. Note that the processor 7 may use the position instead of the velocity as the command value.

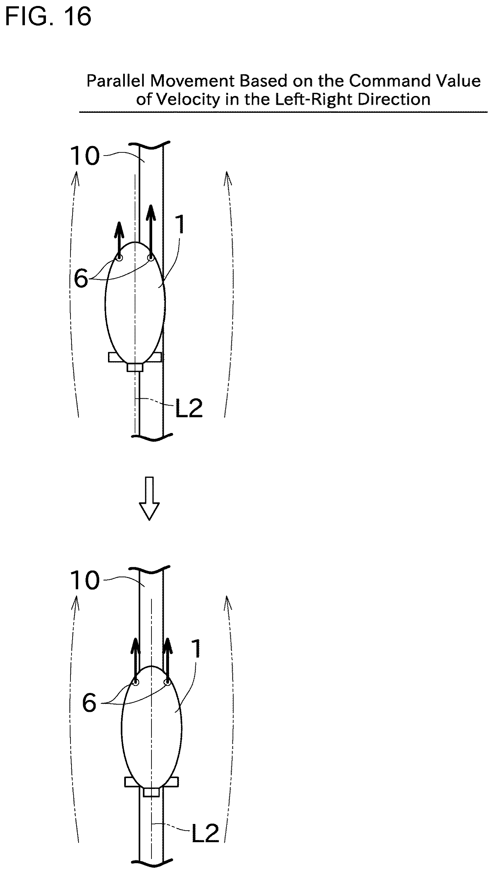

As shown in FIG. 16, the processor 7 calculates a command value such that the central axis of the submersible 1 and the central axis of the pipe 10 coincide. The magnetic flux density becomes smaller as the distance from the pipe 10 increases. Therefore, the left-right command is the one with the larger detection value of the left and right magnetic sensors 6. In the example shown in FIG. 16, the second magnetic flux density in the left-right direction detected by the right magnetic sensor 6 is larger than the first magnetic flux density in the left-right direction detected by the left magnetic sensor 6. Therefore, the left-right command is the right side. Furthermore, the degree of deviation between the central axis of the submersible 1 and the central axis of the pipe 10 appears as a difference in the detection values of the left and right magnetic sensors 6. Therefore, for the velocity command, a value of an amount corresponding to the difference in the detection values of the two magnetic sensors 6 is set. As a result, when the deviation amount is large, the deviation amount can be brought close to zero at an early stage.

The features related to the tracking process described above can be summarized as follows.

### [Feature A]

A submersible that moves along a magnetic pipe provided on the seabed, comprising:
a body;
magnetic sensors arranged side by side on the left and right of the body, for detecting the surrounding magnetic flux density;
a controller that performs control to move the body based on a velocity command value, and control to turn the body based on a direction command value; and
a processor that creates the position command value and the direction command value based on the magnetic flux densities respectively detected by the left and right magnetic sensors.

### [Feature B]

The submersible according to Feature A, wherein
the processor creates the direction command value such that the difference between the bisector of the vectors of the magnetic flux densities detected by the left and right magnetic sensors and the heading approaches zero (in other words, such that the vectors of the magnetic flux density in the horizontal direction detected by the left and right magnetic sensors become symmetrical with respect to the heading).

### [Feature C]

The submersible according to Feature A, wherein
the processor creates the direction command value such that the sum of the magnetic flux densities in the left-right direction detected by the left and right magnetic sensors approaches zero.

### [Feature D]

The submersible according to any one of Features A to C, wherein
the processor creates the direction command value for turning toward the side where the magnetic sensor of the left and right magnetic sensors with the larger detected magnetic flux density in the horizontal direction is arranged.

### [Feature E]

The submersible according to any one of Features A to D, wherein
the processor creates the velocity command value for moving toward the side where the magnetic sensor of the left and right magnetic sensors with the larger detected magnetic flux density in the horizontal direction is arranged.

### [Feature F]

The submersible according to any one of Features A to E, wherein
the processor creates the velocity command value of a magnitude corresponding to the difference in the detected magnetic flux densities in the horizontal direction of the left and right magnetic sensors.

Next, the calibration process of the magnetic sensor 6 will be briefly described. In the sea, there exists a steady magnetic field such as the earth's magnetic field. Therefore, in order to perform the above-described process with high accuracy, it is preferable to eliminate the influence of the steady magnetic field. Specifically, the submersible 1 is moved to a position where a magnetic body such as the pipe 10 does not exist. After that, the submersible 1 is turned 360 degrees at the same position, and the detection value of the magnetic sensor 6 is acquired and stored for each predetermined angle. Note that, in order to return the twist of the cable, the submersible may be further turned 360 degrees in the opposite direction, and the detection value of the magnetic sensor 6 may be acquired for each predetermined angle. As a result, the magnetic flux density due to the steady magnetic field for each predetermined direction can be detected. After that, when performing the above-described process, by subtracting the magnetic flux density due to the above-described steady magnetic field from the detection value of the magnetic sensor 6, the influence of the steady magnetic field can be eliminated.

(Feature 1) As described above, the submersible 1 estimates the position of the magnetic pipe 10 provided on the seabed 11. The submersible 1 comprises a body 2, a magnetic sensor 6, a position sensor 5, a controller 4, and a processor 7. The magnetic sensor 6 is arranged on the body 2 and detects the surrounding magnetic flux density. The position sensor 5 is arranged on the body 2 and detects the position. The controller 4 performs control to move the body 2 and control to turn the body 2. The processor 7 estimates the position of the pipe 10 based on the position detected by the position sensor 5 at the timing when the magnetic sensor 6 detected a peak value.

Since the magnetic force detected by the magnetic sensor 6 becomes larger as the magnetic sensor 6 approaches the pipe 10, the position of the pipe 10 can be estimated by using the peak value of the magnetic sensor 6. In particular, by using the magnetic sensor 6, it is possible to detect the pipe 10 buried in sediment.

(Feature 2) In the submersible 1 of the present embodiment, the controller 4 performs a first search for moving the body 2 along a closed route. The processor 7 detects a peak value using the magnetic sensor 6 during the first search.

As a result, since it moves along a closed route, the pipe 10 existing in the route can be detected almost certainly.

(Feature 3) In the submersible 1 of the present embodiment, the magnetic sensors 6 are arranged side by side on the left and right. The controller 4 performs a second search for moving the body 2 linearly and, at a turning timing, turning the body 2 toward the one of the left and right magnetic sensors 6 with the larger detected magnetic flux density. The processor 7 detects a peak value using the magnetic sensors 6 during the second search.

As a result, since the submersible 1 is turned in the direction of approaching the pipe 10, the pipe 10 can be detected at an early stage.

(Feature 4) In the submersible 1 of the present embodiment, the magnetic sensor 6 detects the magnetic flux density of each of three axes. The processor 7 estimates the position of the pipe 10 using at least one of a horizontal peak value, which is a peak value of the length of the vector of the magnetic flux density in the horizontal direction, and a height peak value, which is an absolute value of the peak value of the magnetic flux density in the height direction.

As a result, a peak value can be detected by a method corresponding to the magnetic field created by a bar-shaped magnetic body.

(Feature 5) In the submersible 1 of the present embodiment, the processor 7 preferentially uses the horizontal peak value of the horizontal peak value and the height peak value, and estimates the position of the pipe 10 using the height peak value only when the horizontal peak value cannot be detected.

By providing a priority order, duplicate counting of peak values can be suppressed. Furthermore, since the height peak value may be weak even directly above the pipe 10, the detection accuracy of the pipe 10 can be increased by preferentially using the horizontal peak value.

(Feature 6) In the submersible 1 of the present embodiment, the processor 7 determines each position when a plurality of peak values was detected as a candidate position of the pipe 10. One of the candidate positions is determined as the estimated position of the pipe 10.

As a result, since the estimated position is determined from a plurality of candidate positions, a highly valid estimated position can be obtained.

(Feature 7) In the submersible 1 of the present embodiment, the magnetic sensors 6 are arranged side by side on the left and right. The processor 7 determines the position on a straight line connecting the position of the left magnetic sensor 6 at the timing when the left magnetic sensor 6 detected a horizontal peak value and the position of the right magnetic sensor 6 at the timing when the right magnetic sensor 6 detected a horizontal peak value as the estimated position of the pipe 10.

As a result, the position of the pipe 10 can be accurately estimated just by the submersible 1 intersecting with the pipe 10 once.

(Feature 8) In the submersible 1 of the present embodiment, the magnetic sensors 6 are arranged side by side on the left and right. The processor 7 estimates that the pipe 10 exists at the intersection of a virtual line L1 obtained by extending the three-dimensional magnetic flux density vector when the left magnetic sensor 6 detected a height peak value, and a virtual line L2 obtained by extending the three-dimensional magnetic flux density vector when the right magnetic sensor 6 detected a height peak value.

As a result, the position of the pipe 10 can be accurately estimated just by the submersible 1 passing above the connection point of the two pipes 10.

(Feature 9) In the submersible 1 of the present embodiment, the magnetic sensors 6 are arranged side by side on the left and right. The controller 4 moves the body 2 to the pipe position estimated by the processor 7. The controller 4 turns the body 2 at the pipe position. The processor 7 estimates the longitudinal direction of the pipe 10 based on the magnetic flux densities detected by the left and right magnetic sensors 6 while the body 2 is turning at the pipe position.

As a result, not only the position but also the orientation of the pipe 10 can be estimated.

(Feature 10) In the submersible 1 of the present embodiment, the processor 7 estimates the heading when the vector of the magnetic flux density in the horizontal direction detected by the left magnetic sensor 6 and the vector of the magnetic flux density in the horizontal direction detected by the right magnetic sensor 6 become symmetrical with respect to the heading as the longitudinal direction of the pipe 10.

As a result, the longitudinal direction of the pipe 10 can be estimated by a simple process.

(Feature 11) In the submersible 1 of the present embodiment, the processor 7 estimates the heading when the sum of the magnetic flux density in the left-right direction detected by the left magnetic sensor 6 and the magnetic flux density in the left-right direction detected by the right magnetic sensor 6 becomes minimum as the longitudinal direction of the pipe 10.

As a result, the longitudinal direction of the pipe 10 can be estimated by a simple process.

A submersible can be realized by combining the features 1 to 11 described above, for example, as follows. The same applies to a method or a program.
[Configuration 1] A submersible having Feature 1.
[Configuration 2] A submersible further having Feature 2 in addition to Configuration 1.
[Configuration 3] A submersible further having Feature 3 in addition to Configuration 1 or 2.
[Configuration 4] A submersible further having Feature 4 in addition to any one of Configurations 1 to 3.
[Configuration 5] A submersible further having Feature 5 in addition to any one of Configurations 1 to 4.
[Configuration 6] A submersible further having Feature 6 in addition to any one of Configurations 1 to 5.
[Configuration 7] A submersible further having Feature 7 in addition to any one of Configurations 1 to 6.
[Configuration 8] A submersible further having Feature 8 in addition to any one of Configurations 1 to 7.
[Configuration 9] A submersible further having Feature 9 in addition to any one of Configurations 1 to 8.
[Configuration 10] A submersible further having Feature 10 in addition to any one of Configurations 1 to 9.

The functions of the elements disclosed in this specification can be executed using a circuit or a processing circuit including a general-purpose processor, a dedicated processor, an integrated circuit, an ASIC (Application Specific Integrated Circuits), a conventional circuit, and/or a combination thereof, configured or programmed to execute the disclosed functions. A processor is considered a processing circuit or a circuit because it includes transistors and other circuits. In this disclosure, a circuit, a unit, or a means is hardware that performs the enumerated functions, or is hardware that is programmed to perform the enumerated functions. The hardware may be the hardware disclosed in this specification, or may be other known hardware that is programmed or configured to perform the enumerated functions. When the hardware is a processor, which is a type of circuit, the circuit, means, or unit is a combination of hardware and software, and the software is used for configuring the hardware and/or the processor.

## Claims

1. A submersible estimating a position of a magnetic pipe provided on a seabed, comprising:
a body;
a magnetic sensor arranged on the body that detects a surrounding magnetic flux density;
a position sensor arranged on the body that detects a position;
a controller that performs control to move the body and control to turn the body; and
a processor that estimates the position of the pipe based on the position detected by the position sensor at a timing when the magnetic sensor detected a peak value.

2. The submersible according to claim 1, wherein
the controller performs a first search for moving the body along a closed route, and
the processor detects the peak value using the magnetic sensor during the first search.

3. The submersible according to claim 1, wherein
the magnetic sensors are arranged side by side on the left and right,
the controller performs a second search for moving the body linearly and, at a turning timing, turning the body toward one of the left and right magnetic sensors with a larger detected magnetic flux density, and
the processor detects the peak value using the magnetic sensors during the second search.

4. The submersible according to claim 1, wherein
the magnetic sensor detects a magnetic flux density of each of three axes, and
the processor estimates the position of the pipe using at least one of a horizontal peak value, which is the peak value of a length of a vector of the magnetic flux density in a horizontal direction, and a height peak value, which is an absolute value of the peak value of the magnetic flux density in a height direction.

5. The submersible according to claim 4, wherein
the processor preferentially uses the horizontal peak value of the horizontal peak value and the height peak value, and estimates the position of the pipe using the height peak value only when the horizontal peak value cannot be detected.

6. The submersible according to claim 1, wherein
the processor determines each position when a plurality of the peak values was detected as a candidate position of the pipe, and
the processor determines one of the candidate positions as an estimated position of the pipe.

7. The submersible according to claim 4, wherein
the magnetic sensors are arranged side by side on the left and right, and
the processor determines a position on a straight line connecting
a position of the left magnetic sensor at a timing when the left magnetic sensor detected the horizontal peak value, and
a position of the right magnetic sensor at a timing when the right magnetic sensor detected the horizontal peak value,
as an estimated position of the pipe.

8. The submersible according to claim 4, wherein
the magnetic sensors are arranged side by side on the left and right, and
the processor estimates that the pipe exists at an intersection of
a virtual line obtained by extending a three-dimensional magnetic flux density vector when the left magnetic sensor detected the height peak value, and
a virtual line obtained by extending a three-dimensional magnetic flux density vector when the right magnetic sensor detected the height peak value.

9. The submersible according to claim 1, wherein
the magnetic sensors are arranged side by side on the left and right,
the controller moves the body to a pipe position estimated by the processor,
the controller turns the body at the pipe position, and
the processor estimates a longitudinal direction of the pipe based on magnetic flux densities detected by the left and right magnetic sensors while the body is turning at the pipe position.

10. The submersible according to claim 9, wherein
the processor estimates a heading when a vector of a magnetic flux density in a horizontal direction detected by the left magnetic sensor and a vector of a magnetic flux density in a horizontal direction detected by the right magnetic sensor become symmetrical with respect to the heading as the longitudinal direction of the pipe.

11. The submersible according to claim 9, wherein
the processor estimates a heading when a sum of a magnetic flux density in a left-right direction detected by the left magnetic sensor and a magnetic flux density in a left-right direction detected by the right magnetic sensor becomes minimum as the longitudinal direction of the pipe.

12. An estimation method for estimating a position of a magnetic pipe provided on a seabed, comprising:
detecting a magnetic flux density using a magnetic sensor arranged on a submersible while moving the submersible, and detecting a position of the submersible using a position sensor arranged on the submersible, and
estimating the position of the pipe based on the position detected by the position sensor at a timing when the magnetic sensor detected a peak value.
